**Europäisches Patentamt**

**European Patent Office**

**Office européen des brevets**

(19)

(11) Publication number: **0 118 273**

**B1**

(12)

# EUROPEAN PATENT SPECIFICATION

(45) Date of publication of patent specification: **09.12.87**

(51) Int. Cl.⁴: **B 01 D 19/00**, G 03 C 1/74

(21) Application number: **84301267.5**

(22) Date of filing: **27.02.84**

(54) **Ultrasonic debubbling method and apparatus therefor.**

(30) Priority: **28.02.83 JP 30965/83**

(43) Date of publication of application:
**12.09.84 Bulletin 84/37**

(45) Publication of the grant of the patent:
**09.12.87 Bulletin 87/50**

(84) Designated Contracting States:
**CH DE FR GB LI**

(56) References cited:
**FR-A-2 221 165**
**GB-A- 873 798**
**US-A-3 239 998**
**US-A-4 135 387**
**US-A-4 398 925**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Tsuboi, Norio**
**2-37-19 Asahigaoka**
**Hino-shi Tokyo (JP)**
Inventor: **Furukawa, Noboru**
**5-2-2 Hinodai**
**Hino-shi Tokyo (JP)**
Inventor: **Miyazawa, Noboru**
**8-4 Kiyokawa-cho**
**Hachioji-shi Tokyo (JP)**

(74) Representative: **Senior, Alan Murray et al**
**J.A. KEMP & CO 14 South Square Gray's Inn London WC1R 5EU (GB)**

# Description

This invention relates to an ultrasonic debubbling method and apparatus therefor.

Certain kinds of liquids need to be debubbled. For example, if a light-sensitive emulsion is coated onto a film material while containing bubbles, it is unable to form a uniform light-sensitive layer on the film. The emulsion therefore has to be debubbled before it is coated on the film material.

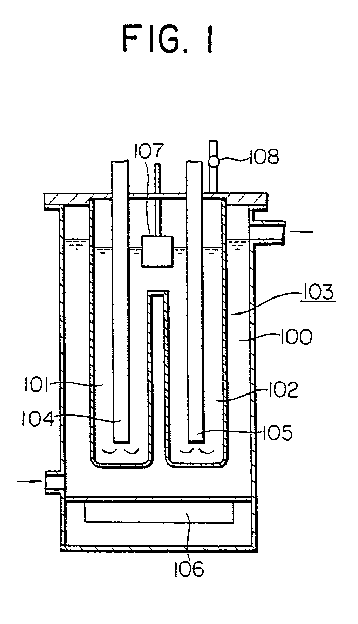

An example of an apparatus for debubbling is disclosed in Japanese Patent Examined Publication No. 6365/1982. This apparatus comprises, as shown in Figure 1 hereto (a) heat-retaining chamber 100; (b) debubbling chamber 103 which extends into this heat-retaining chamber 100 and comprises, for example, a primary cylinder 101 and secondary cylinder 102 which are connected with each other in the upper part of debubbling chamber 103; (c) pipe 104 for introducing a liquid to be debubbled and (d) pipe 105 for draining the debubbled liquid which pipes are inserted from above into cylinders 101, 102 respectively so as to nearly reach the bottoms of the cylinders; and (e) ultrasonic transducer 106 arranged at the lower part of debubbling chamber 103. In this apparatus, debubbling is performed in a manner that liquid to be debubbled is fed from pipe 104 for introducing the liquid to be debubbled into primary cylinder 101 until the liquid level reaches the upper part of cylinder 101 and then the upper part of secondary cylinder 102. Thereafter, the liquid flows down to pipe 105 for draining the debubbled liquid so as to be drained therefrom, and during the passage of the liquid through the apparatus, ultrasonic waves are radiated from ultrasonic transducer 106 to the liquid to be debubbled so as to urge bubbles up to the surface by applying an ultrasonic radiation pressure. In the drawing, 107 is a float and 108 is an air-relief valve.

In an ultrasonic debubbling process, in order to increase the debubbing efficiency per unit time, i.e. the debubbling capability, it may be considered to increase ultrasonic energy input. However, in this apparatus, the liquid to be debubbled in both of cylinders 101, 102 is irradiated with ultrasonic waves by means of a common ultrasonic transducer 106. Therefore, new bubbles are produced because of the cavitation effect when an ultrasonic energy is increased, so that bubbles produced in secondary cylinder 102 are drained upon suction into pipe 105. As a result, the liquid which should be debubbled in a debubbling process still contains bubbles. It is therefore unable to debubble satisfactorily.

In this apparatus, a sedimental particle in a sedimental particle-containing liquid such as silver halide in a light-sensitive silver halide emulsion apt to deposit to the bottoms of cylinders 101, 102, if the apparatus is used for a long time. Whenever debubbling chamber 103 is cleaned to remove such depositions, pipes 104, 105 should be detached from debubbling chamber 103 and further debubbling chamber 103 is also detached from heat-retaining chamber 100. Therefore, the cleaning thereof becomes troublesome, in particular with a large-sized apparatus.

The prior art also includes GB—A—1470179 which discloses applying ultrasonic waves to a liquid, for debubbling, when in a chamber and when passing through an inlet to the chamber.

It is an object of the invention to provide an improved ultrasonic debubbling method and an ultrasonic debubbling apparatus having a simple structure and an effective debubbling performance.

According to the present invention, there is provided a method of debubbling liquid by passing the liquid into an inlet means, then introducing said liquid into a debubbling chamber from said inlet means, and radiating ultrasonic waves at said liquid when in said inlet means, and when in said debubbling chamber, characterised in that high energy ultrasonic waves are radiated at said liquid when in said inlet means and low energy ultrasonic waves are radiated at said liquid when in said debubbling chamber.

According to the present invention there is also provided an ultrasonic debubbling apparatus including a debubbling chamber, an introducing pipe for introducing a liquid to be debubbled into said debubbling chamber, a primary ultrasonic transducer for irradiating the liquid in the introducing pipe and a secondary ultrasonic transducer for irradiating the liquid in the debubbling chamber wherein the primary and secondary ultrasonic transducers respectively irradiate the liquid with high energy and low energy ultrasonic waves.

The invention will be more clearly understood from the following description which is given by way of example only with reference to the accompanying drawings, in which:

Figure 1, already discussed, is a vertical sectional view illustrating the structure of a known ultrasonic debubbling apparatus;

Figure 2 is a vertical sectional view illustrating an embodiment of ultrasonic debubbling apparatus of the invention;

Figure 3 is a plan view of the apparatus shown in Figure 2, the upper parts from the level of the ultrasonic wave transmitting medium being transversely cut away for clearness.

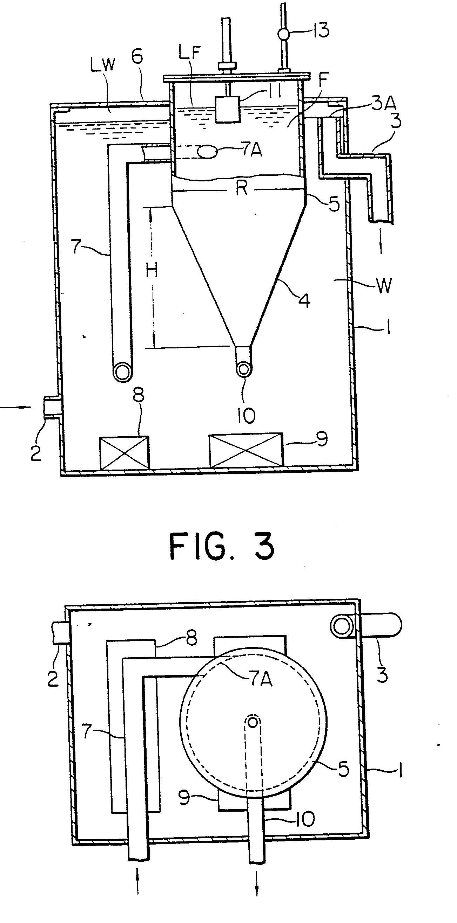

Figures 2 and 3 illustrate an embodiment of ultrasonic debubbling apparatus of the invention, wherein, 1 is a medium chamber having hot-water inlet pipe 2 and overflow outlet pipe 3 and which is filled with hot-water W, for example as an ultrasonic wave transmitting medium capable of propagating ultrasonic waves and of keeping warm. Lw indicates the surface level of hot-water W. Cylindrical debubbling chamber 5 having an upwardly widening circular-cone shape in the lower part thereof is fixed in the upper part of medium 1 so as to dip into hot-water W except at its upper end. The debubbling chamber 5 is supported by a cover 6 which tightly closes the medium chamber 1, and is thus fixed to the medium chamber 1. The nozzle of a debubbling liquid inlet pipe 7 arranged to be dipped to a predetermined depth into hot-water W in medium chamber 1, is connected at a tangential opening 7A to debubbling chamber 5 at a level lower than surface level Lw of hot-water. An ultrasonic debubbling apparatus is completed by providing a primary ultrasonic transducer 8 and a secondary one 9 in medium chamber 1, these being positioned under inlet pipe 7 and debubbling chamber 5, respectively. In the drawing, 10 is a pipe for draining debubbled liquid which is arranged to connect to the lower end of debubbling chamber 5. 11 is a float for detecting liquid surface level LF is debubbling chamber 5, and 13 is an air-relief valve. In Figure 3, some parts of the ultrasonic debubbling apparatus do not appear, because the upper part thereof is cut away.

In the apparatus illustrated, the lower part 4 of the debubbling chamber 5 is desirably formed so its height H is greater than its inner diameter R thereof, so that turbulent liquid flow in debubbling chamber 5 can be prevented. As for the primary or secondary ultrasonic transducers, a water-proof type ultrasonic transducer having a piezoelectric crystal made of lead zirconate titanate, for example, may be used. It is desired to separate the ultrasonic transducer 8, 9 from inlet pipe 7 and debubbling chamber 5 by more than the order of 150 mm so that erosion caused in either pipe 7 or debubbling chamber 5 may be largely prevented.

A liquid can be debubbled by means of such apparatus in a manner as follows:

At first, hot water, for example, is supplied as a heat retaining medium through hot-water supply pipe 2 into medium chamber 1 to overflow from overlow outlet 3A of outlet pipe 3 so that the surface level Lw of hot water W is thereby maintained to the level of overflow outlet 3A. Thus, pipe 7 for introducing a liquid to be debubbled and debubbling chamber 5, except the upper part thereof, are immersed in the hot water; and then, primary and secondary ultrasonic transducers 8, 9 are driven.

Next, the liquid to be debubbled is supplied from the introducing pipe 7 into the debubbling chamber 5 while air-relief valve 13 remains opened. At this time, part of the down-stream side of outlet pipe 10 is kept higher than the prescribed liquid surface level, and debubbling chamber 5 is filled with liquid F to be debubbled. When the liquid surface level LF is detected by float 11 as having reached the prescribed level, air-relief valve 13 is closed to make debubbling chamber 5 close up tight. Thereafter, the internal pressure of debubbling chamber 5 and the pressure in outlet pipe 10 become the same, and then debubbled liquid is drained from outlet pipe 10 in the same amount as liquid is introduced through introducing pipe 7 into debubbling chamber 5. Thus liquid to be debubbled continuously flows through debubbling chamber 5.

High-energy ultrasonic waves of not lower than 0.35 W/cm² for example are produced by driving primary ultrasonic oscillator 8, to radiate the liquid to be debubbled in introducing pipe 7, and a cavitation is thereby produced. On the other hand, low-energy ultrasonic waves of not higher than 0.35 W/cm², for example, are vibrated by driving secondary ultrasonic transducer 9 relatively to radiate the liquid to be debubbled in debubbling chamber 5. In this way debubbling can be performed without producing any cavitation.

According to this method, debubbling is performed in the following manner. Liquid to be debubbled is radiated by high-energy ultrasonic waves at first when the liquid passes through introducing pipe 7 toward debubbling chamber 5, and a cavitation is thereby produced, so that the bubbles in the liquid to be debubbled cohere together or cohere with bubbles produced by the cavitation to form into large-sized bubbles. These cohered large bubbles flow together with the liquid to be debubbled into debubbling chamber 5, and the relatively large bubbles quickly rise to the surface of the liquid by their own buoyancy and separate from the liquid to be debubbled. Liquid F to be debubbled in debubbling chamber 5 is now radiated with low-energy ultrasonic waves generated by secondary ultrasonic transducer 9, so that an upward force is exerted on the cohered bubbles by the pressure of the ultrasonic waves. Therefore, the cohered bubbles are accelerated up to the liquid surface and even bubbles unable to rise by their own buoyancy are pushed up so as to separate from the liquid. The result is effective debubbling. There are not any new bubbles produced in liquid F to be debubbled in debubbling chamber 5 because there is no cavitation produced, and it is therefore possible not to include any bubbles in liquid drained from outlet pipe 10. When the volume of the upper space within the debubbling chamber 5 increases due to continuing debubbling operations, the liquid surface level LF is lowered and air-relief valve 13 is opened by float 11 so that pressure is released, liquid surface level LF is raised, air-relief valve 13 is closed at a defined position, and the debubbling operations are thus continued.

In the above-mentioned processes, the ultrasonic waves generated by the primary ultrasonic transducer 8 have energy more than the so-called limiting intensity so that they produce cavitation in a liquid to be debubbled, while ultrasonic waves generated by the secondary ultrasonic transducer 9 have energy less than this limiting intensity. The limiting intensity value varies according to pressure and temperatures, but a value of 0.35 W/cm² is likely in a normal atmosphere.

The velocity of downward flow of liquid F to be debubbled in debubbling chamber 5 should be enough not to hinder the rise of bubbles to the liquid surface. Practically, the velocity of flow may be set at about 0.1 to 0.5 cm/sec, when the viscosity of a liquid to be debubbled is 10 to 50 mPas.

In this invention, high-energy ultrasonic waves are radiated into introducing pipe 7 which is arranged to be of a predetermined length in medium chamber 1 and this radiation does not have any adverse effect, and so it can be of increased energy. Accordingly, a large debubbling effect can be obtained. In addition, bubbles cohere together in introducing pipe 7 but do not rise therein to the surface of the liquid. It is not, therefore required to use any tank having a wide bottom area, but it is sufficient to use debubbling chamber 5 to collectively serve as a chamber for debubbling. Thus as compared with the conventional double-chamber type apparatus, a single chamber suffices, so that process-loss is reduced and the dead liquid-flow that unavoidably arises due to the change in direction of liquid flow in the first chamber of the known apparatus, is eliminated. Also, the apparatus of the invention is more simple and may be made smaller.

Relative to the prior construction, the flux velocity of liquid to be debubbled is lowered in the only debubbling chamber, as described above. It is therefore possible to reduce precipitate accumulation areas and to prevent troubles caused by such precipitates. In the example shown in the drawing, where the lower part 4 of debubbling chamber 5 diverges upwards, the cleaning thereof may be readily performed.

As shown in the drawing, a liquid to be debubbled preferably flows from introducing pipe 7 into debubbling chamber 5 along a tangential direction of the debubbling chamber 5, so it is prevented from taking a short cut through the debubbling chamber 5.

Modifications to the above described apparatus may be made within the scope of the claims. For example, it is possible to provide a medium chamber into which introducing pipe 7 is arranged, separately from another medium chamber to which debubbling chamber 5 is positioned, or to use a crooked pipe such as a spiral or corrugated pipe to serve as the introducing pipe 7. In such cases, the predetermined length of the introducing pipe need not be very long, provided that ultrasonic waves generated by primary ultrasonic oscillator 8 can be intense.

As an example of the invention, an ultrasonic debubbling apparatus constructed as described above and as shown in the drawing was used to debubble under the following conditions, and with increasing flow rate of liquid to be debubbled until the maximum limiting flux velocity was obtained at which no bubbles appeared in the liquid to be debubbled passing from the outlet pipe. The result was that the rate of 9.4 litres per min was found to be the limiting rate, when the volume of the debubbling chamber was 50 litres and the dimensions R and H of Figure 2 were 376 mm and 356 mm respectively.

The conditions were:
Hot-water in the medium chamber:
　Temperature: 38°C
　Flow rate: 0.5 litres per min.

Liquid to be debubbled:
　Composition: 6% by weight of gelatin
　solution
　Viscosity: 30 mPas
　Bubble contents: 3 cm$^3$/100 cm$^3$.

According to the invention as described above, a debubbling operation can be accomplished by using a simply constructed means, in a simple method, and with good efficiency.

**Claims**

1. A method of debubbling liquid by passing the liquid into an inlet means, then introducing said liquid into a debubbling chamber from said inlet means, and radiating ultrasonic waves at said liquid when in said inlet means, and when in said debubbling chamber, characterised in that high energy ultrasonic waves are radiated at said liquid when in said inlet means and low energy ultrasonic waves are radiated at said liquid when in said debubbling chamber.

2. A method according to claim 1 characterised in that the high-energy ultrasonic waves have an intensity sufficient to produce cavitation, and the low-energy ultrasonic waves have an intensity insufficient to produce any cavitation.

3. A method according to claim 2, characterised in that said high-energy ultrasonic waves have an intensity of not lower than 0.35 W/cm$^2$ and said low-energy ultrasonic waves have an intensity of not higher than 0.35 W/cm$^2$ under normal conditions.

4. A method according to claim 1, 2 or 3 characterised in that said liquid is introduced from said inlet means into said debubbling chamber in a direction tangential to said debubbling chamber.

5. A method according to claim 1, 2, 3 or 4 characterised in that an ultrasonic wave transmitting medium is supplied and used to transmit said ultrasonic waves.

6. A method according to claim 5 characterised in that the ultrasonic wave transmitting medium is hot-water.

7. A method according to claim 5 or 6, characterised in that said ultrasonic wave transmitting medium is common to both the types of ultrasonic waves.

8. An ultrasonic debubbling apparatus including a debubbling chamber (5), an introducing pipe (7) for introducing a liquid to be debubbled into said debubbling chamber (5), a primary ultrasonic transducer (8) for irradiating the liquid in the introducing pipe (7) and a secondary ultrasonic transducer (9) for irradiating the liquid in the debubbling chamber (5) wherein the primary and secondary ultrasonic transducers respectively irradiate the liquid with high energy and low energy ultrasonic waves.

9. An ultrasonic debubbling apparatus according to claim 8, characterised in that said primary and secondary ultrasonic transducers (8, 9) are located under said introducing pipe (7) and said debubbling chamber (5), respectively.

10. An ultrasonic debubbling apparatus according to claim 8 or 9 characterised in that the lower part of the debubbling chamber (5) is in the form of a circular cone (4) widening upwards.

11. An ultrasonic debubbling apparatus according to claim 10, characterised in that the height of the circular cone of the debubbling chamber is greater than its maximum diameter.

12. An ultrasonic debubbling apparatus according to any one of claims 8 to 11 characterised in that said introducing pipe (7) is connected to said debubbling chamber (5) along a tangent line thereto.

13. An ultrasonic debubbling apparatus according to any one of claims 8 to 12 characterised by a medium chamber (1) containing a heat and ultrasonic wave transmitting medium, said debubbling chamber (5) and a predetermined length of said introducing pipe (7) being located in said medium chamber (1).

14. An ultrasonic debubbling apparatus according to any one of claims 8 to 13 characterised in that said primary and secondary ultrasonic transducers (8, 9) are of water-proof type having a piezoelectric crystal.

15. An ultrasonic debubbling apparatus according to any one of claims 8 to 14 characterised in that said primary and secondary ultrasonic transdcuers (8, 9) are respectively separated from said introducing pipe (7) and said debubbling chamber (5) by more than 150 mm.

16. An ultrasonic debubbling apparatus according to any one of claims 8 to 15 characterised by a float (11) for detecting the liquid level in the debubbling chamber (5) and an air relief valve (13) for releasing air from said debubbling chamber (5), so that said liquid level may be kept constant by coupling said float and said air-relief valve.

**Patentansprüche**

1. Verfahren zum Entfernen von Blasen aus einer Flüssigkeit durch Leiten dieser Flüssigkeit in eine Einlaßvorrichtung und anschliessende Weiterleitung der Flüssigkeit in eine Kammer zum Entfernen von Blasen, wobei die sich in der Einlaßvorrichtung und in der Kammer für die Entfernung von Blasen befindliche Flüssigkeit mit Ultraschallwellen bestrahlt wird, dadurch gekennzeichnet, dass die Flüssigkeit mit hochenergetischen Ultraschallwellen bestrahlt wird, wenn sie sich in der Einlaßvorrichtung befindet, während die Flüssigkeit mit niedrigenergetischen Ultraschallwellen bestrahlt wird, wenn sie sich in der Kammer für das Entfernen von Blasen befindet.

2. Verfahren nach Anspruch 1, dadurch gekennzeichnet, dass die hochenergetischen Ultraschallwellen eine Intensität haben, die ausreicht, um Kavitation zu verursachen, während die niedrigenergetischen Ultraschallwellen eine Intensität haben, die nicht ausreicht, um Kavitation zu verursachen.

3. Verfahren nach Anspruch 2, dadurch gekennzeichnet, dass die hochenergetischen Ultraschallwellen eine Intensität von nicht weniger als 0,35 W/cm² haben, während die niedrigenergetischen Ultraschallwellen eine Intensität von nicht mehr als 0,35 W/cm² unter normalen Bedingungen haben.

4. Verfahren nach einem der Ansprüche 1, 2 oder 3, dadurch gekennzeichnet, dass die Flüssigkeit aus der Einlaßvorrichtung in die Kammer für das Entfernen von Blasen in einer Richtung eingeleitet wird, die tangential zu der Kammer für das Entfernen von Blasen liegt.

5. Verfahren nach einem der Ansprüche 1, 2, 3 oder 4, dadurch gekennzeichnet, dass ein Ultraschallwellen leitendes Medium vorgesehen ist und dafür verwendet wird, die Ultraschallwellen zu übertragen.

6. Verfahren nach Anspruch 5, dadurch gekennzeichnet, dass das die Ultraschallwellen übertragende Medium heisses Wasser ist.

7. Verfahren nach einem der Ansprüche 5 oder 6, dadurch gekennzeichnet, dass für beide Arten von Ultraschallwellen ein gemeinsames Medium verwendet wird.

8. Vorrichtung zum Entfernen von Blasen unter Verwendung von Ultraschall mit einer Kammer (5) für das Entfernen von Blasen, einem Einleitungsrohr (7) für die Einleitung der Flüssigkeit in die Kammer (5) für die Entfernung von Blasen, einem ersten Ultraschallwandler (8) für die Bestrahlung der Flüssigkeit im Einleitungsrohr (7) und einem zweiten Ultraschallwandler (9) für die Bestrahlung der Flüssigkeit in der Kammer (5) für das Entfernen von Blasen, wobei der erste und zweite Ultraschallwandler jeweils die Flüssigkeit mit hochenergetischen und niedrigenergetischen Ultraschallwellen bestrahlen.

9. Vorrichtung für das Entfernen von Blasen unter Verwendung von Ultraschall nach Anspruch 8, dadurch gekennzeichnet, dass der erste und zweite Ultraschallwandler (8, 9) jeweils unter dem Einleitungsrohr (7), bzw. der Kammer (5) für die Entfernung von Blasen angeordnet sind.

10. Vorrichtung für das Entfernen von Blasen unter Verwendung von Ultraschall nach einem der Ansprüche 8 oder 9, dadurch gekennzeichnet, dass der untere Teil der Kammer (5) für das Entfernen der Blasen die Form eines sich nach oben öffnenden kreisförmigen Konus (4) hat.

11. Vorrichtung für das Entfernen von Blasen unter Verwendung von Ultraschall nach Anspruch 10, dadurch gekennzeichnet, dass die Höhe des kreisförmigen Konus der Kammer für das Entfernen der Blasen grösser als der maximale Durchmesser der Kammer ist.

12. Vorrichtung für das Entfernen von Blasen unter Verwendung von Ultraschall nach einem der Ansprüche 8 bis 11, dadurch gekennzeichnet, dass das Einleitungsrohr (7) mit der Kammer (5) für das Entfernen von Blasen entlang einer Tangente verbunden ist.

13. Vorrichtung für das Entfernen von Blasen unter Verwendung von Ultraschall nach einem der Ansprüche 8—12, dadurch gekennzeichnet, dass ein Mediumbehälter (1) vorgesehen ist, der

9

**0 118 273**

10

ein Hitze und Ultraschallwellen übertragendes Medium enthält, wobei die Kammer (5) für das Entfernen von Blasen und eine vorbestimmte Länge des Einleitungsrohres (7 in dem Mediumbehälter (1) angeordnet sind.

14. Vorrichtung für das Entfernen von Blasen unter Verwendung von Ultraschall nach einem der Ansprüche 8 bis 13, dadurch gekennzeichnet, dass der erste und zweite Ultraschallwellenwandler (8, 9) wasserdicht sind und einen piezoelektrischen Kristall aufweisen.

15. Vorrichtung für das Entfernen von Blasen unter Verwendung von Ultraschall nach einem der Ansprüche 8 bis 14, dadurch gekennzeichnet, dass der erste und zweite Ultraschallwandler (8, 9) vom Einleitungsrohr (7) und der Kammer (5) jeweils in einer Entfernung von mehr als 150 mm angeordnet sind.

16. Vorrichtung für das Entfernen von Blasen unter Verwendung von Ultraschall nach einem der Ansprüche 8 bis 15 dadurch gekennzeichnet, dass ein Schwimmer (11) für die Erfassung des Flüssigkeitsstandes in der Kammer (5) für das Entfernen von Blasen sowie ein Entlüftungsventil (13) für das Ablassen von Luft aus der Kammer (5) vorgesehen sind, so dass durch Kopplung des Schwimmers und des Entlüftungsventils der Flüssigkeitsstand konstant gehalten werden kann.

**Revendications**

1. Procédé pour l'élimination des bulles d'un liquide en faisant passer le liquide dans un moyen d'entrée, puis en introduisant ledit liquide dans une chambre d'élimination de bulles depuis ledit moyen d'entrée, et en irradiant le liquide avec des ondes ultrasonores lorsqu'il se trouve dans le moyen d'entrée, et lorsqu'il se trouve dans la chambre d'élimination de bulles, caractérisé en ce que le liquide est irradié par des ondes ultrasonores à haute énergie lorsqu'il se trouve dans le moyen d'entrée et le liquide est irradié par des ondes ultrasonores à basse énergie lorsqu'il se trouve dans la chambre d'élimination de bulles.

2. Procédé selon la revendication 1, caractérisé en ce que les ondes ultrasonores à haute énergie ont une intensité suffisante pour produire une cavitation, et les ondes ultrasonores à basse énergie ont une intensité insuffisante pour produire une cavitation quelconque.

3. Procédé selon la revendication 2, caractérisé en ce que les ondes ultrasonores à haute énergie ont une intensité minimale de 0,35 W/cm$^2$ et les ondes ultrasonores à basse énergie ont une intensité maximale de 0,35 W/cm$^2$ dans des conditions normales.

4. Procédé selon la revendication 1, 2 ou 3, caractérisé en ce que le liquide est introduit depuis le moyen d'entrée dans la chambre d'élimination de bulles dans une direction tangentielle par rapport à la chambre d'élimination de bulles.

5. Procédé selon la revendication 1, 2, 3 ou 4, caractérisé en ce qu'un agent transmettant les ondes ultrasonores est fourni et utilisé pour transmettre lesdites ondes ultrasonores.

6. Procédé selon la revendication 5, caractérisé en ce que l'agent transmettant les ondes ultrasonores est de l'eau chaude.

7. Procédé selon la revendication 5 ou 6, caractérisé en ce que l'agent transmettant les ondes ultrasonores est commun aux deux types d'ondes ultrasonores.

8. Appareil pour l'élimination de bulles par ultrasons comprenant une chambre (5) d'élimination des bulles, un tuyau d'introduction (7) pour introduire un liquide à débarrasser de ses bulles dans la chambre (5) d'élimination des bulles, un transducteur ultrasonore primaire (8) pour irradier le liquide dans le tuyau d'introduction (7) et un transducteur ultrasonore secondaire (9) pour irradier le liquide dans la chambre (5) d'élimination des bulles, dans lequel les transducteurs ultrasonores primaire et secondaire irradient respectivement le liquide avec des ondes ultrasonores à haute énergie et à basse énergie.

9. Appareil pour l'élimination de bulles par ultrasons selon la revendication 8, caractérisé en ce que les transducteurs ultrasonores primaire et secondaire (8, 9) sont situés respectivement sous le tuyau d'introduction (7) et la chambre (5) d'élimination des bulles.

10. Appareil pour l'élimination de bulles par ultrasons selon la revendication 8 ou 9, caractérisé en ce que la partie inférieure de la chambre (5) d'élimination des bulles est en forme de cône circulaire (4) s'élargissant vers le haut.

11. Appareil pour l'élimination de bulles par ultrasons selon la revendication 10, caractérisé en ce que la hauteur du cône circulaire de la chambre d'élimination des bulles est plus grande que son diamètre maximal.

12. Appareil pour l'élimination de bulles par ultrasons selon l'une quelconque des revendications 8 à 11, caractérisé en ce que le tuyau d'introduction (7) est relié à la chambre (5) d'élimination des bulles le long d'une ligne tangente à celle-ci.

13. Appareil pour l'élimination de bulles par ultrasons selon l'une quelconque des revendications 8 à 12, caractérisé par une chambre (1) à agent qui contient un agent transmettant la chaleur et les ondes ultrasonores, la chambre (5) d'élimination des bulles et une longueur prédéterminée du tuyau d'introduction (7) étant situées dans ladite chambre (1) à agent.

14. Appareil pour l'élimination de bulles par ultrasons selon l'une quelconque des revendications 8 à 13, caractérisé en ce que lesdits transducteurs ultrasonores primaires et secondaire (8, 9) sont d'un type étanche à l'eau et possédent un cristal piézo-électrique.

15. Appareil pour l'élimination de bulles par ultrasons selon l'une quelconque des revendications 8 à 14, caractérisé en ce que les transducteurs ultrasonores primaire et secondaire (8, 9) sont respectivement séparés de plus de 150 mm du tuyau d'introduction (7) et de la chambre (5) d'élimination des bulles.

16. Appareil pour l'élimination de bulles par ultrasons selon l'une quelconque des revendica-

6

tions 8 à 15, caractérisé par un flotteur (11) pour détecter le niveau de liquide dans la chambre (5) d'élimination des bulles et par un purgeur d'air (13) pour relâcher de l'air hors de la chambre (5) d'élimination des bulles, de façon que ledit niveau de liquide puisse être maintenu constant par couplage du flotteur et du purgeur d'air.

# FIG. 1

# FIG. 3